# EUROPÄISCHE PATENTSCHRIFT

(11) **EP 3 415 279 B1**
(45) Veröffentlichungstag und Bekanntmachung des Hinweises auf die Patenterteilung: **25.12.2019**
(21) Anmeldenummer: 18171852.9
(22) Anmeldetag: 11.05.2018
(51) Int. Cl.: B25B 23/00, B60J 5/06

(54) **KOMBINATION EINER AUFWICKELWELLE MIT EINER ANTRIEBSWELLE EINER RATSCHE**
COLLECTION OF A WINDING SHAFT FOR MOTOR VEHICLE CLADDING
MISE EN OEUVRE STRUCTURÉE D'UN ARBRE D'ENROULEMENT POUR UN CARÉNAGE DE VÉHICULE AUTOMOBILE

(30) Priorität: 12.06.2017 DE 102017112847; 29.08.2017 DE 102017119789
(43) Veröffentlichungstag der Anmeldung: 19.12.2018
(73) Patentinhaber: PWP SA, CH-1530 Payerne (CH)
(72) Erfinder: Gijsbers, Erik, 3232 Ins (CH); Suer, Arne, 42859 Remscheid (DE)
(74) Vertreter: Müller, Enno

(56) Entgegenhaltungen:
- DE-A1-102008 029 240
- DE-A1-102015 007 288
- US-A- 2 538 350
- US-A1- 2016 096 256

## Beschreibung

### Gebiet der Technik

Die Erfindung betrifft eine System mit einer Aufwickelwelle für eine Kraftfahrzeug-Verkleidung, die fußseitig einen Adapter aufweist, und einer Antriebswelle einer Ratsche, wobei ein Adapterende mit einem freien Ende der Antriebswelle formschlüssig zusammenwirkt.

### Stand der Technik

Insbesondere im Bereich von LKW-Aufbauten sind solche Systeme bekannt.

Im Hinblick auf eine Zollsicherung eines derartigen Systems ist bereits die DE 10 2015 007 288 A1 bekannt geworden. Die hieraus bekannte Lösung sieht eine Formschlussverbindung durch eine Rille oder eine überstehende Rippe an dem Adapter mit einem Sicherungsteil vor, das seinerseits wiederum in der Ratsche selbst gehaltert ist.

### Zusammenfassung der Erfindung

Ausgehend von dem dargelegten Stand der Technik stellt sich der Erfindung die Aufgabe, ein System mit einer Zollsicherung der in Rede stehenden Art anzugeben, bei welcher eine Entkopplung zwischen der Antriebswelle und dem Adapter in vorteilhafter Weise gehindert ist.

Diese Aufgabe ist beim Gegenstand des Anspruches 1 gelöst, wobei darauf abgestellt ist, dass der Adapter im Zuge eines Aufsetzens auf ein zugeordnetes Ende der Antriebswelle relativ zu der Antriebswelle um deren Drehachse entgegen einer Aufwickelrichtung zu verdrehen ist.

Sowohl zum Ansetzen des Adapters an die Antriebswelle als auch zum Entfernen ist jeweils zwingend eine Relativdrehung des Adapters zu der Antriebswelle notwendig. Hierdurch ist eine sichere Formschlussverbindung insbesondere in der Spannstellung der Kraftfahrzeug-Verkleidung gegeben. Die Formschlussstellung zwischen Adapter und Antriebswelle kann insbesondere in einer Spannstellung der Kraftfahrzeug-Verkleidung, wie beispielsweise eine Plane, nicht aufgehoben werden, um so beispielsweise eine Zollsicherung zu umgehen.

Ein Abheben des Adapters von der Antriebswelle allein durch eine lineare Verlagerung des Adapters entlang einer Verlängerung der Antriebswelle, ist unterbunden. Vielmehr wird im Zuge einer solchen Verlagerung eine Drehung des Adapters um diese Achse aufgezwungen und über den Adapter entsprechend eine Drehung der Aufwickelwelle. Diese Drehung jedoch ist in der Spannstellung der Kraftfahrzeug-Verkleidung im Wesentlichen unterbunden, so zumindest über einen Teilbereich des benötigten Drehweges.

Die Verdrehung zum Aufsetzen erfolgt entgegen der Aufwickelrichtung. Hieraus folgend ist zur Aufhebung der Form-schlussstellung eine Verdrehung des Adapters in Spannrichtung der Wickelwelle nötig. Dies ist jedoch nur bei (teilweise) entspannter Verkleidung möglich. In der insbesondere zollgesicherten Verschlussstellung ist jedoch die Verkleidung bevorzugt maximal gespannt. Eine Verdrehung des Adapters ist entsprechend nicht möglich oder nur über einen zur Aufhebung des Formschlusses zwischen Adapter und Antriebswelle nicht ausreichenden Drehweg.

Das zugeordnete Ende der Antriebswelle kann über seine Länge in Achsrichtung als ein um die Drehachse gewendelter Mehrkant ausgebildet sein. Gegenüber einem hier möglichen Gewinde ist so ein geringer Verdrehwinkel ermöglicht. Zudem ergeben sich so keine übereinander liegenden Gewindegänge. Insgesamt ergibt sich eine stabile Ausgestaltung. Der Mehrkant kann, wie bevorzugt, einteilig und materialeinheitlich mit der Antriebswelle ausgebildet sein.

Die Wendelung kann gegeben sein durch eine über die in Achsrichtung betrachtete Erstreckung des Mehrkants vorgesehene Verdrehen des Mehrkant-Grundrisses um wenige Winkelgrade, beispielsweise um 5 bis 15°, bis hin zu beispielsweise 45 oder 60° um die Drehachse und über die axiale Erstreckungslänge des Mehrkants.

Das Aufnahmeende des Adapters kann für das zugeordnete Ende der Antriebswelle als ein um die Drehachse gewendelter Hohl-Mehrkant ausgebildet sein. Bevorzugt ist der Hohl-Mehrkant hinsichtlich sowohl der Wendelung des Mehrkants, als auch der Grundriss- und Axialabmessung formangepasst an den antriebswellenseitigen Mehrkant.

Der antriebswellenseitige Mehrkant kann, wie bevorzugt, ein Vierkant sein, weiter bevorzugt ein Vierkant mit quadratischem Grundriss. Alternativ kann der Mehrkant auch eine bspw. 3-, 5- oder 6-eckige bis hin zu 12-eckige oder 20-eckige (oder n-eckige) Grundrissgestaltung aufweisen.

Die Kantenlänge des Mehrkants im Grundriss kann einem 0,5- bis 2-Fachen des quer zur Drehachse betrachteten Durchmessermaßes der Antriebswelle entsprechen, wobei eine Kantenlänge bevorzugt sein kann, die das Durchmessermaß nicht übersteigt.

Das in Achsrichtung betrachtete Längserstreckungsmaß des Mehrkants kann dem etwa 1- bis 3-Fachen, weiter etwa dem 1,5- bis 2-Fachen der vorbeschriebenen Kantenlänge entsprechen.

Gegenstand der Erfindung ist auch der Adapter allein. Hierbei ist der Adapter im Bereich seines Aufnahmeendes angepasst an das zuordbare Ende der Antriebswelle und nur unter Drehung von der Antriebswelle entfernbar, bspw. unter Ausbildung des Aufnahmeendes als ein gewindeartiger Abschnitt oder weiter bspw. als ein Hohl-Mehrkant.

Bei einer gewindeartigen Ausgestaltung des Aufnahmeendes kann, wie bevorzugt, auch das zugeordnete Ende der Antriebswelle gewindeförmig gestaltet sein.

### Kurze Beschreibung der Zeichnungen

Nachstehend ist die Erfindung anhand der beigefügten Zeichnung erläutert, die aber lediglich ein Ausführungsbeispiel darstellt. Auf der Zeichnung zeigt:
- Fig. 1: eine Draufsicht auf eine Ratsche mit einer Aufwickelwelle und einem Adapterteil in einer ersten Ausführungsform;

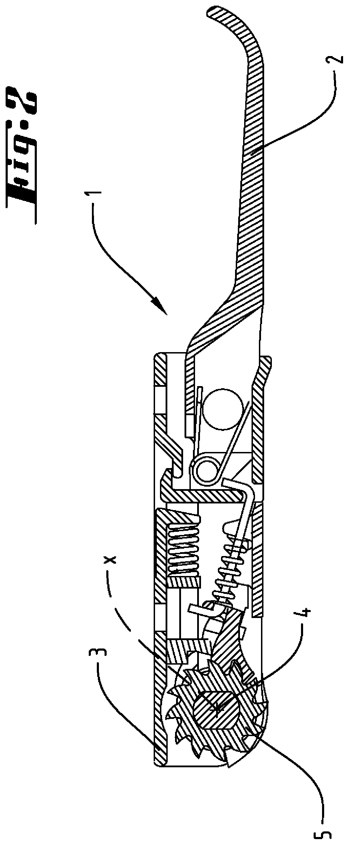

- Fig. 2: einen Längsschnitt durch die Spannratsche der Spannvorrichtung entlang der Linie II-II in Figur 1;

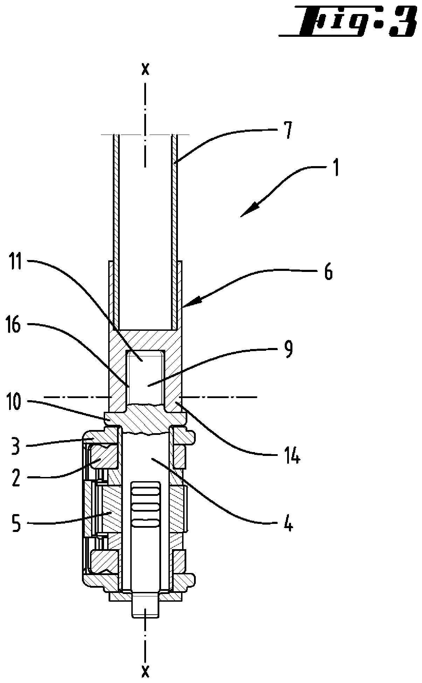

- Fig. 3: den Schnitt gemäß der Linie III-III in Figur 1;
- Fig. 4: den Querschnitt gemäß der Linie IV-IV in Figur 1;
- Fig. 5: die Draufsicht auf einen antriebswellenseitigen Mehrkant;
- Fig. 6: die Antriebswelle und den Adapter in perspektivischer Explosions darstellung;

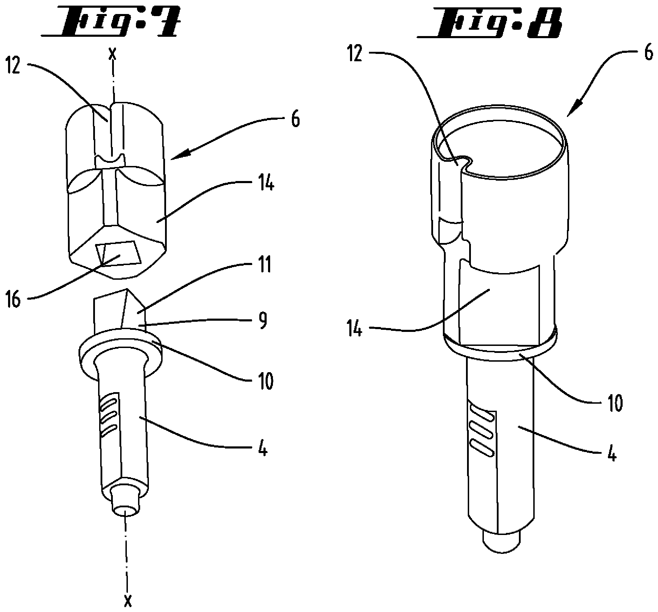

- Fig. 7: die Antriebswelle und den Adapter in einer weiteren perspektivischen Explosionsdarstellung;
- Fig. 8: die Antriebswelle und den Adapter in perspektivischer Darstellung, die Zuordnungsstellung betreffend.

### Beschreibung der Ausführungsformen

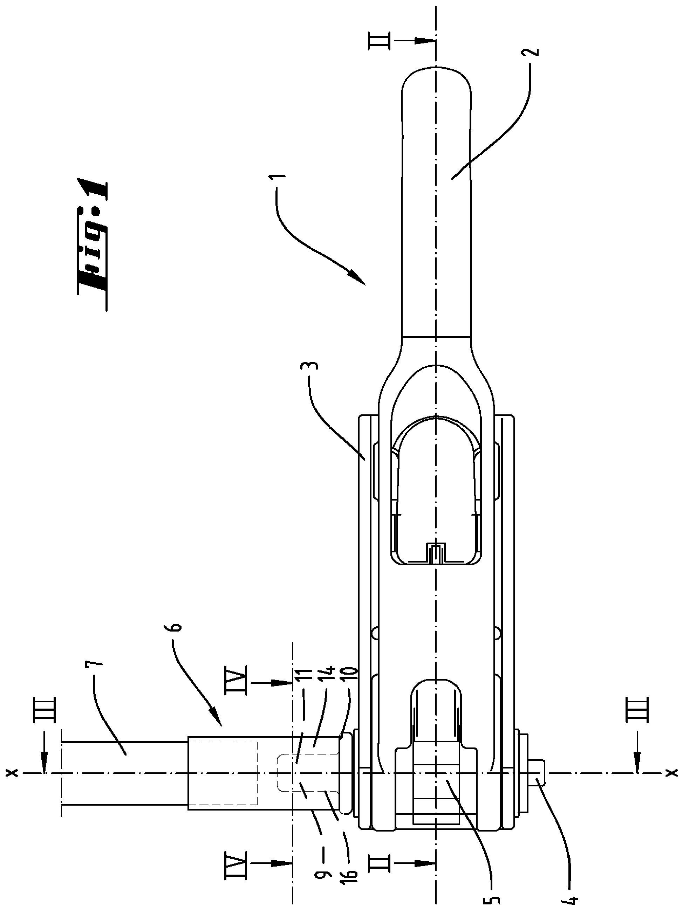

Dargestellt und beschrieben ist, zunächst mit Bezug zu Figur 1, eine Ratsche 1 in Art einer Spannratsche, die zum Spannen von Gegenständen, wie Gurte oder Planen, an LKW-Fahrzeugen üblicherweise eingesetzt wird.

Die Ratsche 1 weist einen Ratschenhebel 2 auf, der um eine geometrische Drehachse x schwenkbeweglich an einem Befestigungsteil 3 angelenkt ist.

Bestandteile der Ratsche 1 sind im Wesentlichen weiter eine Antriebswelle 4 und ein Ratschenzahnrad 5.

Über die Antriebswelle 4 ist eine endseitig mit einem Adapter 6 versehene Aufwickelwelle 7 um die Drehachse x drehbar.

Die Antriebswelle 4 weist ein Antriebsende 9 auf. Dieses ragt bezüglich des Befestigungsteils 3 in Achsrichtung der Antriebswelle 4 nach außen über und formt in dem dargestellten Ausführungsbeispiel einen um die Drehachse x gewendelten Mehrkant 11 in Form eines Vierkant-Dorns mit quadratischem Grundriss.

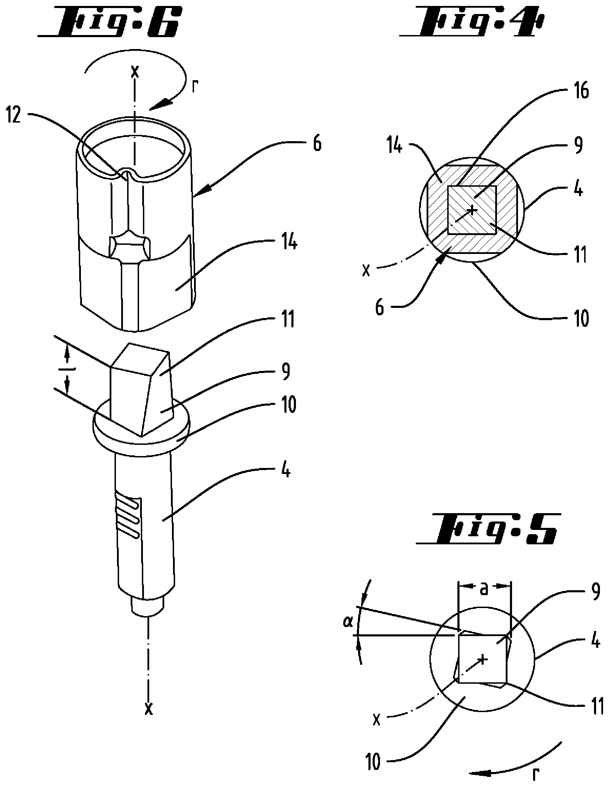

Die Wendelung des Mehrkants 11 ergibt sich durch Verdrehen des hier quadratischen Grundrisses um etwa 10 bis 15° um die Drehachse x, dies weiter über die axiale Länge l des Mehrkants 1 (vgl. Figur 6). Die axiale Länge l entspricht in dem dargestellten Ausführungsbeispiel etwa dem 1,5- bis 2-Fachen der Kantenlänge a des Mehrkant-Grundrisses.

Zwischen dem nach außen überstehenden Antriebsende 9 und dem sich im Inneren des Befestigungsteiles 3 erstreckenden Achsabschnitt der Antriebswelle 4 ist ein radial vorstehender umlaufender Flansch 10 mit kreisscheibenförmigem Grundriss ausgebildet.

Der Adapter 6 ist bevorzugt mit der hieran angeordneten und in axialer Verlängerung sich erstreckenden Aufwickelwelle 7 formschlussverbunden, wobei zur weiteren Drehsicherung ein nach radial innen weisender Vorsprung 12 in eine angepasste, in Achsrichtung verlaufende Nut der Aufwickelwelle 7 greift.

Der Adapter 6 weist ein der Aufwickelwelle 7 abgewandtes, zur Formschlussverbindung mit der Antriebswelle 4 der Ratsche 1 ausgebildetes Aufnahmeende 14 auf. Ausgehend von der Stirnfläche im Bereich des freien, der Aufwickelwelle 7 abgewandten Endes erstreckt sich in Achsrichtung eine Formschlussöffnung, welche im Wesentlichen angepasst ist an das Antriebsende 9 der Antriebswelle 4, hier entsprechend in Form eines um die Drehachse x gewendelten Hohl-Mehrkants 16 bzw. Hohl-Vierkants.

Die axiale Tiefe der Formschlussöffnung 16 ist angepasst an die axiale Länge l des Antriebsendes 9, wie auch die quer zur Drehachse x gemessene Kantenlänge des Hohl-Mehrkants 16 an die Kantenlänge a des Mehrkants 11 angepasst ist.

Zum Aufsetzen des Adapters 6 auf das zugeordnete Ende der Antriebswelle 6 ist der Adapter 6 relativ zu der Antriebswelle 6 um die Drehachse x zu verdrehen, dies unter eindrehender Aufnahme des Mehrkants 11 in dem Hohl-Mehrkant 16. Die Aufdrehrichtung r ist entgegen einer Aufwickelrichtung gerichtet, wobei der Aufdrehwinkel α entsprechend der Wendelung der Mehrkant-Grundfläche 10 bis 15° gewählt sein kann.

Im Bereich des Aufnahmeendes 14 kann der Adapter 6 wandungsaußenseitig in einem Querschnitt quer zur Drehachse x im Wesentlichen als Vierkant ausgebildet sein, beispielsweise zum Ansetzen eines Schraubwerkzeuges, mittels welchem ein Ansetzen oder Anheben des Adapters 6 von der Antriebswelle 4 unterstützt oder herbeigeführt werden kann.

**Liste der Bezugszeichen**

| | | | |
|---|---|---|---|
| 1 | Ratsche | a | Kantenlänge |
| 2 | Ratschenhebel | l | Länge |
| 3 | Befestigungsteil | r | Aufdrehrichtung |
| 4 | Antriebswelle | x | Drehachse |
| 5 | Ratschenzahnrad | | |
| 6 | Adapter | | |
| 7 | Aufwickelwelle | | |
| 9 | Antriebsende | α | Aufdrehwinkel |
| 10 | Flansch | | |
| 11 | Mehrkant | | |
| 12 | Vorsprung | | |
| 14 | Aufnahmeende | | |
| 16 | Hohl-Mehrkant | | |

## Patentansprüche

1. System aus einer Aufwickelwelle (7) für eine Kraftfahrzeug-Verkleidung, die fußseitig einen Adapter (6) aufweist, und einer eine Drehachse (x) aufweisenden Antriebswelle (4) einer Ratsche (1), wobei ein Adapterende (14) mit einem freien Ende der Antriebswelle (4) formschlüssig zusammenwirkt, **dadurch gekennzeichnet, dass** der Adapter (6) im Zuge des Aufsetzens auf ein zugeordnetes Ende der Antriebswelle (4) relativ zu der Antriebswelle (4) um deren Drehachse (x) entgegen einer Aufwickelrichtung zu verdrehen ist.

2. System nach Anspruch 1, **dadurch gekennzeichnet, dass** das zugeordnete Ende der Antriebswelle (4) über seine Länge (l) als ein um die Drehachse (x) gewendelter Mehrkant (11) ausgebildet ist.

3. System nach einem der vorhergehenden Ansprüche, **dadurch gekennzeichnet, dass** ein Aufnahmeende (14) des Adapters (6) für das zugeordnete Ende der Antriebswelle (4) als ein um die Drehachse (x) gewendelter Hohl-Mehrkant (16) ausgebildet ist.

## Claims

1. System consisting of a winding shaft (7) for a motor vehicle covering, which shaft has an adapter (6) at a base end, and a drive shaft (4) of a ratchet (1), which shaft has a rotational axis (x), an adapter end (14) interacting with a free end of the drive shaft (4) in a form-fitting manner, **characterised in that** the adapter (6), when being placed on an associated end of the drive shaft (4), can be rotated relative to the drive shaft (4) about the rotational axis (x) thereof and counter to a winding direction.

2. System according to claim 1, **characterised in that** the associated end of the drive shaft (4) is formed as a polygon (11) coiled about the rotational axis (x) over the length (1) of said shaft.

3. System according to either of the preceding claims, **characterised in that** a receiving end (14) of the adapter (6) for the associated end of the drive shaft (4) is formed as a hollow polygon (16) coiled about the rotational axis (x).

## Revendications

1. Système, comprenant un arbre d'enroulement (7) pour un carénage ou habillage de véhicule automobile, qui présente un adaptateur (6) côté pied, et un arbre d'entraînement (4) d'un cliquet (1), qui présente un axe de rotation (x), une extrémité (14) de l'adaptateur coopérant avec une extrémité libre de l'arbre d'entraînement (4) par coopération de forme, **caractérisé en ce que** l'adaptateur (6) doit être tourné par rapport à l'arbre d'entraînement (4) autour de l'axe de rotation (x) de celui-ci en sens contraire au sens d'enroulement lors de sa mise en place sur une extrémité associée de l'arbre d'entraînement (4).

2. Système selon la revendication 1, **caractérisé en ce que** l'extrémité associée de l'arbre d'entraînement (4) est réalisée sur sa longueur (1) sous la forme d'un polygone (11) tournant hélicoïdalement autour de l'axe de rotation (x).

3. Système selon l'une des revendications précédentes, **caractérisé en ce qu'**une extrémité de réception (14) de l'adaptateur (6) pour l'extrémité associée de l'arbre d'entraînement (4) est réalisée sus la forme d'un creux polygonal (16) tournant hélicoïdalement autour de l'axe de rotation (x).
